# EUROPEAN PATENT SPECIFICATION

(11) **EP 3 725 658 B1**
(45) Date of publication and mention of the grant of the patent: **03.11.2021**
(21) Application number: 20169800.8
(22) Date of filing: 16.04.2020
(51) Int. Cl.: B62M 6/90, B62M 6/65, B62M 6/45, B60L 50/20, B60L 50/60, H02K 41/03, B62J 43/13, H02K 7/14, B60L 7/10, B62J 6/06, H02K 1/14, B62J 43/28

(54) **ELECTRIC BICYCLE WITH ELECTRIC ENERGY STORAGE**
ELEKTRISCHES FAHRRAD MIT ELEKTRISCHEM AKKUMULATOR
BICYCLETTE ÉLECTRIQUE AVEC ACCUMULATEUR D'ÉNERGIE ÉLECTRIQUE

(30) Priority: 19.04.2019 IT 201900006116
(43) Date of publication of application: 21.10.2020
(73) Proprietor: H.E.R.S. S.r.l., 20158 Milano (IT)
(72) Inventor: COCCETTI, Silvano, I-20158 MILANO (IT); SORICE, Dario, I-20158 MILANO (IT)
(74) Representative: De Ros, Alberto

(56) References cited:
- CN-A- 105 059 462
- DE-U1- 29 822 343
- US-A- 5 788 007
- US-B1- 6 486 582

## Description

### FIELD OF THE INVENTION

The present invention relates to an electric bicycle with possibility of electric energy storage.

### STATE OF THE ART

Electric bicycles have been known for decades; they are bicycles that derive their motion from the rotation of pedals actuated by a seated person and, if necessary or desired by the seated person, by the action of an electric engine.

Known electric bicycles are equipped with an electric accumulator adapted for powering the electric engine. When the electric accumulator is depleted, it is necessary to recharge it through connection to a suitable power supply.

The electric bicycle can be considered fully efficient only if its electric accumulator is sufficiently charged, for example with a charge greater than 50% of the maximum charge. Indeed, if the electric accumulator is completely depleted, the electric bicycle can be used only as a normal bicycle, and if the electric accumulator is quite depleted, there is the risk of it being completely depleted right when the electric bicycle is being used.

The charging of the electric accumulator is a critical element of known electric bicycles also because it takes a long time, for example many hours.

Patent document CN105059462A solution is based on the principle of the generation of a magnetic field by interaction between permanent magnets and induction coil assemblies. CN105059462A discloses an electric bicycle according to the preamble of claim 1.

Patent document US6486582B1 solution is based on electromagnetic induction such as it acts in linear electric motors, so to employ the technology of the linear electric motor to allow realisations on a rotating machine.

### SUMMARY

It would thus be desirable to have an electric bicycle in which the charging of the electric accumulator can be done infrequently or even avoided.

The Applicant has realized that during use of an electric bicycle a lot of energy is wasted. For example, when it is wished to stop the bicycle the brakes are applied and energy is wasted in the form of heat generated at the brake pads, and when going downhill the speed of the bicycle tends to increase and therefore the brakes are applied and energy is wasted in the form of heat generated at the brake pads.

In general, the purpose of the present invention is to provide a solution to limit the energy wastage in an electric bicycle and/or to exploit part of the energy supplied to the pedals by the cyclist (i.e. the person seated on the bicycle, who should be considered the "user" of the bicycle) to charge the electric accumulator of the electric bicycle.

A first specific purpose of the present invention is to transform a part of the mechanical energy generated by the cyclist, for example when pedaling on the flat, to charge the electric accumulator of the electric bicycle; typically, it will be a small part, for example 1-10%.

A second specific purpose of the present invention is to transform at least one part of the mechanical energy that would be wasted when going downhill or braking, into electric energy and use this electric energy to charge the electric accumulator of the electric bicycle; typically and preferably, it will be a large part, for example 60-90% (taking into account the efficiency of the energy conversion).

These and other purposes are accomplished thanks to the electric bicycle having the characteristics expressed in the attached claims that define the present invention.

### LIST OF FIGURES

The present invention will be clearer from the following detailed description to be considered together with the attached drawings in which:
Fig. 1 shows a schematic view of an embodiment of an electric bicycle according to the present invention,
Fig. 2 shows a partial perspective view of a wheel of the bicycle of Fig. 1,
Fig. 3A shows a perspective view of a first example of an electromagnetic assembly of the bicycle of Fig. 1 and of part of a rim of a wheel,
Fig. 3B shows a cross section view of a first example of an electromagnetic assembly suitable for the bicycle of Fig. 1 and of part of a rim of a wheel,
Fig. 4A shows a perspective view of a second example of an electromagnetic assembly suitable for the bicycle of Fig. 1 and of a rim of a wheel,
Fig. 4B shows a plan view of electromagnets of the electromagnetic assembly of Fig. 4A,
Fig. 5 shows a first block diagram of some possible components of the bicycle of Fig. 1 and of possible electric connections thereof,

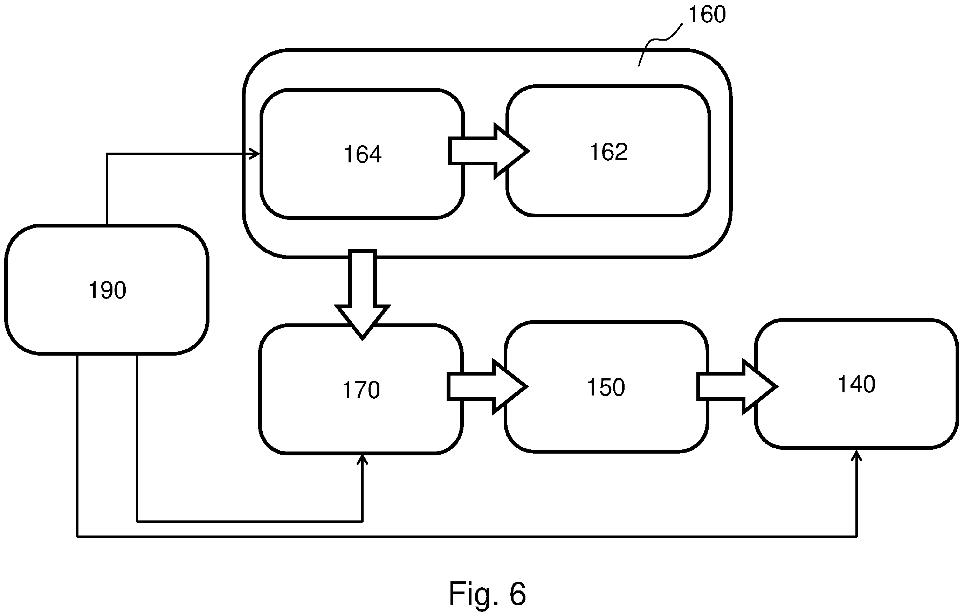

Fig. 6 shows a second block diagram of some possible components of the bicycle of Fig. 1 and of possible electric connections thereof, and
Fig. 7 shows a third block diagram of some possible components of the bicycle of Fig. 1 and of possible electric connections thereof.

As can be easily understood, there are various ways to practically implement the present invention that is defined in its main advantageous aspects in the attached claims and it is not limited either by the following detailed description or by the attached drawings.

### DETAILED DESCRIPTION

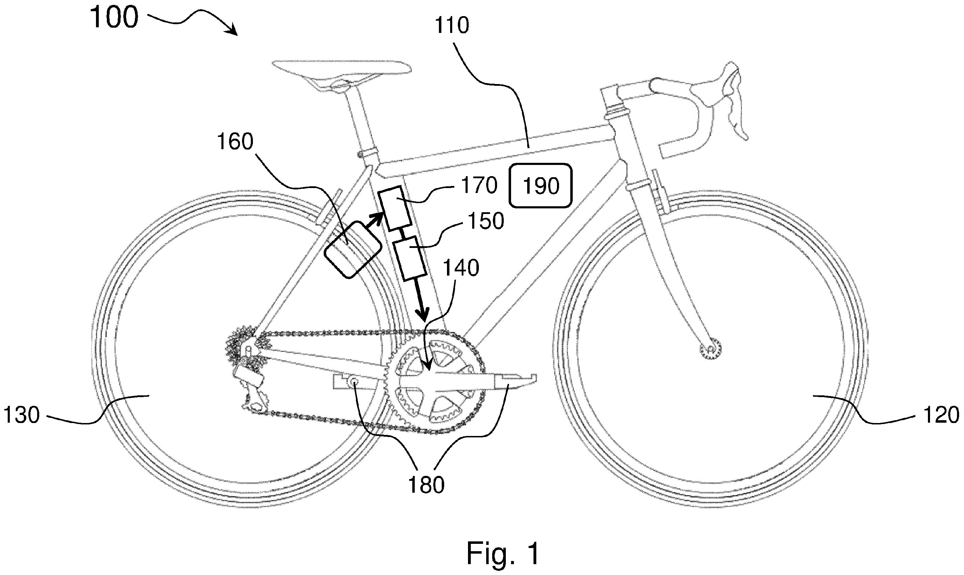

Fig. 1 shows an electric bicycle 100; it comprises in particular: a frame 110, a front wheel 120 mounted on a front fork of the frame (in particular between the two arms of the fork), a rear wheel 130 mounted on a rear fork of the frame (in particular the two "seat stays" and between the two "chainstays").

As can be seen in Fig. 1, the "seat tube" of the frame has a larger section than the section of the "top tube" of the frame and than the section of the "down tube" of the frame; this makes it possible to internally house some components of the bicycle 100 (in particular an electric converter and/or an electric accumulator and/or an electronic control unit). However, according to alternative embodiments, the sections of these three tubes of the frame can also be substantially the same.

The bicycle 100 is electric and thus comprises an electric accumulator 150 and an electric engine 140 powered by the electric accumulator, as well as a pedal crank typically with two pedals 180. In the example of Fig. 1, the electric engine is positioned at the transmission axis of the pedal crank. However, according to alternative embodiments, the electric engine could be positioned elsewhere, for example: at the hub of the rear wheel 130 or at the hub of the front wheel 120 or at the chain of the bicycle or integrated in a wheel as will be explained hereinafter.

The bicycle 100 also comprises:
- an "electromagnetic assembly" 160 comprising at least one electromagnet (162) and at least one electric actuator (164) adapted for radially and/or axially changing the position of the electromagnet with respect to the front wheel 120 or to the rear wheel 130,
- an electric converter 170 electrically connected to the electromagnetic assembly 160 and to the electric accumulator 150 such as to be able to charge the electric accumulator thanks to electric energy received from the electromagnetic assembly, and
- an electronic control unit 190 adapted for controlling the actuator.

The bicycle 100 can further comprise a rotation speed meter 230 of the front wheel 120 and/or of the rear wheel 130, and/or a rotation speed meter 240 of the shaft of the electric engine 140, and/or a torque meter 250 associated with the transmission axis on which the electric engine 140 and the pedal crank act.

The electronic control unit 190 is further and advantageously adapted for controlling the electric engine 140 for example as a function of a split parameter.

The split parameter represents the amount of power delivered by the electric engine 140, i.e. the amount of intervention of the electric engine, with respect to the total power measured on the transmission axis by the torque meter 250, where the total power is given by the sum of the power delivered by the engine and the power able to be attributed to the pedaling of the person seated on the electric bicycle, i.e. the cyclist who is the primary "user" of the bicycle.

The split parameter can be set by the cyclist before use and/or during use of the electric bicycle 100 based on the desired percentage of intervention of the engine. Advantageously, the cyclist can choose between a set of predetermined values of the split parameter that correspond to different training modes, with the possibility for the cyclist, at any moment, to manually change such values.

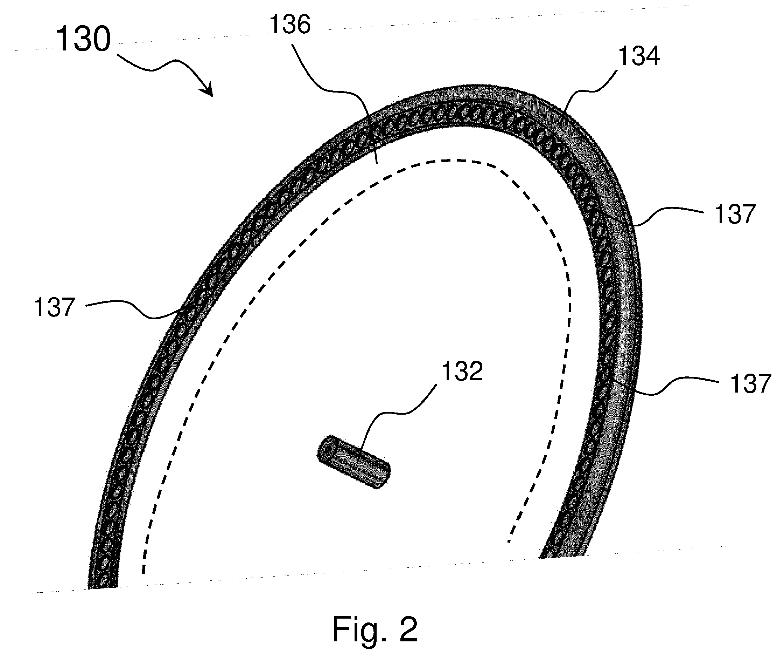

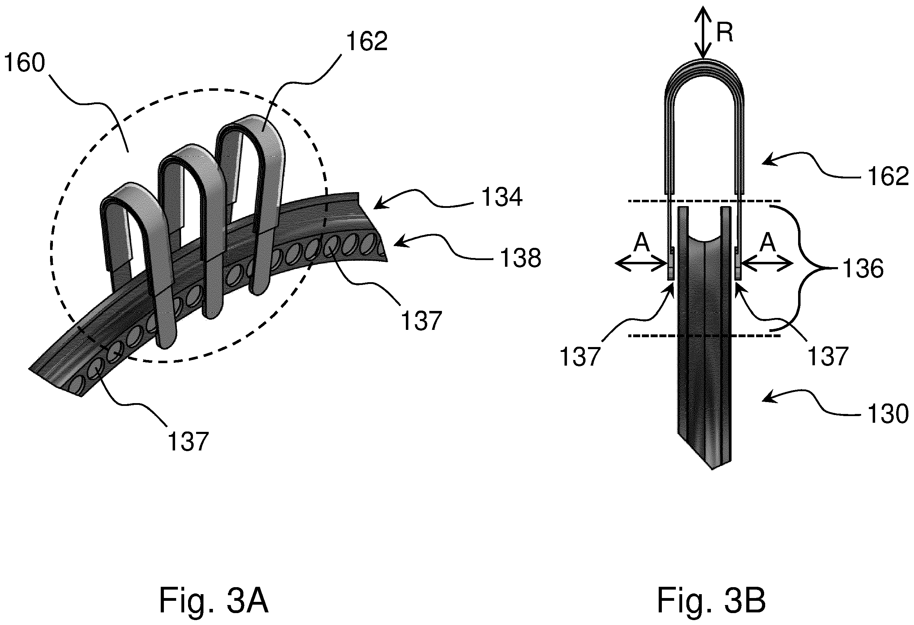

According to the present invention, the front wheel 120 and/or the rear wheel 130 comprises a plurality of magnets 137 arranged at a peripheral region 136 of the wheel (see for example Fig. 2); preferably, the magnets 137 are located only on the rear wheel 130; preferably, the magnets 137 have alternate poles, i.e. a first magnet has the pole N on a first side of the wheel and the pole S on a second side of the wheel, a second magnet (adjacent to the first) has the pole N on the second side of the wheel and the pole S on the first side of the wheel, a third magnet (adjacent to the second) has the pole N on the first side of the wheel and the pole S on the second side of the wheel, and so on. The magnets can have for example and preferably a diameter of 5-30 mm. The magnets can be spaced apart for example and preferably by 2-20 mm. The magnets can for example and preferably be in a number equal to 20-100. In Fig. 2 and in Fig. 3, it is possible to see the wheel 130, its hub 132 and its "rim" 134; the spokes of the wheel and the tyre of the wheel are not represented. In these figures, it is also possible to see the peripheral region 136 as well as an annular element 138 concentric with the wheel and adjacent to the rim 134; in particular, the magnets 137 are fixed to the element 138; alternatively, the magnets could be on one or on both of the flanks of the "rim" 134.

In general, the magnets are spaced from the rim of the wheel in the radial direction towards the hub; in particular, their distance from the rim is less than 50 mm and typically is 2-5 mm. Typically, all of the magnets are arranged the same distance from the rim.

According to a first embodiment and with reference to figure 3, the electromagnets 162 of the assembly 160 (for example the electromagnet 162) have a "U" shape (but it could for example be "horseshoe" shaped or arc of circumference shaped - reference is made in particular to the shape of the core of the electromagnet), are fixed or bound to the frame 110, and are positioned such as to magnetically interact with the plurality of magnets 137.

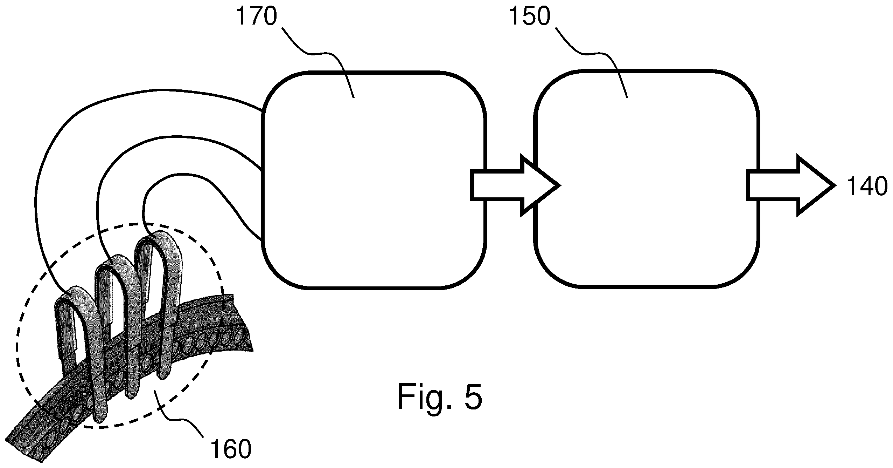

The electromagnetic assembly 160 of Fig. 3 is advantageously provided with at least three adjacent electromagnets. In this case (see Fig. 5), the electric converter 170 is advantageously three-phase.

Figure 3 does not show the fixing means of the assembly 160 to the frame 110. In particular, it does not show the means for fixing/binding the electromagnets of the assembly 160 to one another and to the frame. The fixing could for example be to the front fork or to the seat stays and/or chain stays (preferably to the rear stays).

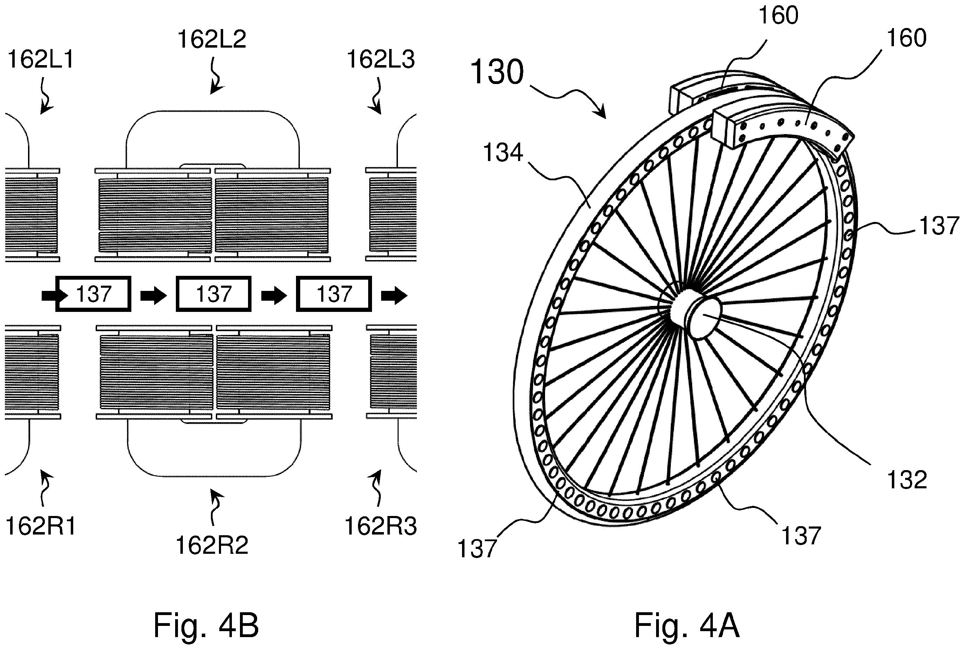

According to a second embodiment and with reference to figure 4, the electromagnets 162 of the assembly 160 have a "U" shape (but they could for example be "horseshoe" shaped or arc of circumference shaped - reference is made in particular to the shape of the core of the electromagnet) and are positioned such as to magnetically interact with the plurality of magnets 137; it should be noted that while in the electromagnet of Fig. 3 there is a single coil wound around the central part of the "U" in the electromagnet of Fig. 4 there are two coils around the two extreme parts of the "U". The electromagnetic assembly 160 of Fig. 4 is provided with at least three pairs of adjacent electromagnets (see Fig. 4B); the first pair corresponds to the electromagnets 162L1 and 162R1, the second pair corresponds to the electromagnets 162L2 and 162R2, the third pair corresponds to the electromagnets 162L3 and 162R3.

In particular, every pair of electromagnets is arranged such that a first electromagnet (for example, 162R1 or 162R2 or 162R3) is adjacent to one side of the wheel (in particular the two extreme segments of the first electromagnet are directed towards a first side of the magnets 137 in movement, in particular rotating as a unit with the wheel) and a second electromagnet (for example, 162L1 or 162L2 or 162L3) is adjacent to the opposite side of the wheel (in particular the two extreme segments of the second electromagnet are directed towards a second side of the magnets 137 in movement, in particular rotating as a unit with the wheel), so that on every side of the wheel face three electromagnets (in particular enclosed inside an arched box-like stay) fixed/bound to the assembly 160 (see Fig. 4A) in order to obtain three alternating voltages of equal frequency, out of phase by 120°; even if Fig. 4B is only a schematic figure, it can be seen that advantageously the pitch of the magnets corresponds to the distance between the two extreme segments of the "U" of the electromagnets. In this case (similarly to how shown in Fig. 5), the electric converter 170 is advantageously three-phase.

Figure 4 does not show the fixing means of the assembly 160 to the frame 110; the fixing could for example be to the front fork or to the seat stays and/or chain stays (preferably to the rear stays).

Advantageously, the electric engine can be integrated in the wheel, in particular in the rear wheel 130 of the electric bicycle.

In this case, for example, the electric converter 170 is bi-directional and is adapted, in a first operating mode ("charging of the accumulator" = "electric braking"), for receiving electric energy from the electromagnets of the assembly and providing it to the electric accumulator, and, in a second operating mode ("discharging of the accumulator" = "electric propulsion"), for receiving electric energy from the electric accumulator and providing it to the electromagnets of the assembly thereby making a wheel of the bicycle rotate; in this way, the electric engine (or rather magnetic induction engine) is made through the set of electromagnets of the "electromagnetic assembly" (with reference to the solution of Fig. 3, at least two electromagnets are needed, preferably at least three electromagnets) (with reference to the solution of Fig. 4, at least two pairs of electromagnets are needed, preferably at least three pairs of electromagnets) and of the magnets of the wheel.

Advantageously, the switches between the first operating mode and the second operating mode are controlled by the electronic control unit of the bicycle.

Preferably, the electronic control unit is also provided with a manual control for example for use by the person on the saddle.

The bicycle may also be provided for example with a third operating mode in which the electric components are not active. This may be obtained, for example and advantageously, by taking the electromagnets away from the wheel; in an equivalent but less efficient way, this may be obtained by opening the electric circuit that connects the coils of the electromagnets to the electric converter. This third operating mode may also be obtained for example thanks to the electronic control unit optionally with manual control.

According to a first possible variant schematized in Fig. 3B, each electromagnet (for example the electromagnet 162) may be adapted for being radially moved ("R") so as to change the magnetic interaction thereof with the magnets 137. Preferably, such a movement is adapted for being carried out through a radial electric actuator (not shown in the figures).

According to a second possible variant schematized in Fig. 3B, one or preferably both of the arms of each electromagnet (for example the electromagnet 162) can be adapted for being axially moved ("A") so as to change the magnetic interaction thereof with the magnets 137. Preferably, such movement is adapted for being carried out through an axial electric actuator (not shown in the figures).

A third possible variant corresponds to the combination of the first variant and of the second variant described earlier.

It should be noted that such movements could also be provided as variants of the example of Fig. 4 or of other different examples.

The electronic control unit 190 of the bicycle 100 (see Fig. 1) is adapted for controlling at least the radial and/or axial electric actuator so as to regulate the electric energy received by the electromagnetic assembly 160, i.e. to regulate the charging energy flow of the electric accumulator 150.

Typically, it will concern regulating the charging electric current of the electric accumulator 150 for example measuring the current entering and exiting the accumulator with a sensor.

Typically, the charging status of the accumulator is monitored by measuring the voltage at the terminals of the accumulator with a sensor.

More specifically, the electronic control unit 190 is adapted for controlling the electric actuator so as to avoid the electric accumulator 150 being charged when the electric engine 140 contributes to the propulsion of the electric bicycle 100, in particular when the motion of the bicycle is caused both by the action on the pedals 180 and by the electric engine 140.

The electric accumulator 150 may be charged when a braking sensor 220 detects braking. In this first charging mode, the electric control unit 190 receives a signal from the braking sensor 220 and controls the electric actuator so as to maximize the electric interaction thereof with the magnets 137 and thus adding an additional electromagnetic braking force.

The electric accumulator 150 is charged when a pedaling sensor 210 detects pedaling; as already stated, this happens when the electric engine 140 does not contribute to the propulsion of the electric bicycle 100. In this second charging mode, the electric control unit 190 receives a signal from the pedaling sensor 210 and controls the electric actuator so as to determine a charging energy flow of the electric accumulator 150.

In the first charging mode the distance between each electromagnet and the magnets 137 regulated by the electric actuator is the minimum, whereas in the second charging mode the distance between each electromagnet and the magnets 137 regulated by the electric actuator is an intermediate distance between the minimum distance and the maximum distance so that there is magnetic interaction between electromagnets and magnets.

The electric accumulator 150 may also be charged when a braking sensor 220 does not detect braking and a pedaling sensor 210 does not detect pedaling, for example when the electric bicycle moves downhill and the cyclist does not brake and does not pedal; this charging mode will be made clearer hereinafter.

Typically, the pedaling sensor 210 is an electric sensor, in particular a hall sensor, positioned close to the pedals 180 of the bicycle 100 and the braking sensor 220 is a switch actuated by the cyclist pressing on the brake lever (or both brake levers). Advantageously, the bicycle 100 comprises a braking sensor 220 positioned at every brake lever.

In the first charging mode, the energy used to charge the electric accumulator 150 is obtained from the recovery of energy during braking, otherwise dissipated in the form of heat at the brake pads of the bicycle, whereas in the second charging mode it is obtained from the energy surplus provided by the cyclist.

In the second charging mode the cyclist is required to give more energy (and therefore more effort in terms of physical force) with respect to that necessary for the propulsion of the bicycle.

The electronic control unit 190 is adapted for setting the second charging mode of the electric accumulator 150 as a function of data or information received from the cyclist, i.e. from the user of the electric bicycle 100, and/or as a function of data or information received by one or more sensors.

The cyclist can, for example, at any moment, both before use of the electric bicycle, and during use of the electric bicycle, decide to activate and/or deactivate and/or set the second charging mode of the accumulator, for example with the intention of carrying out a more intense activity and/or to burn more calories or, conversely, due to tiredness, with the purpose of decreasing the physical effort. According to a case that could be quite typical, the cyclist could decide to dedicate a predetermined percentage of the mechanical energy generated by his/her pedaling (typically only when pedaling on the flat or almost flat) to charging the electric accumulator; for example, such a percentage could be 1-10% by the cyclist and could be fixed and predetermined or able to be set by the cyclist; of course, the charging strategies could be much more sophisticated.

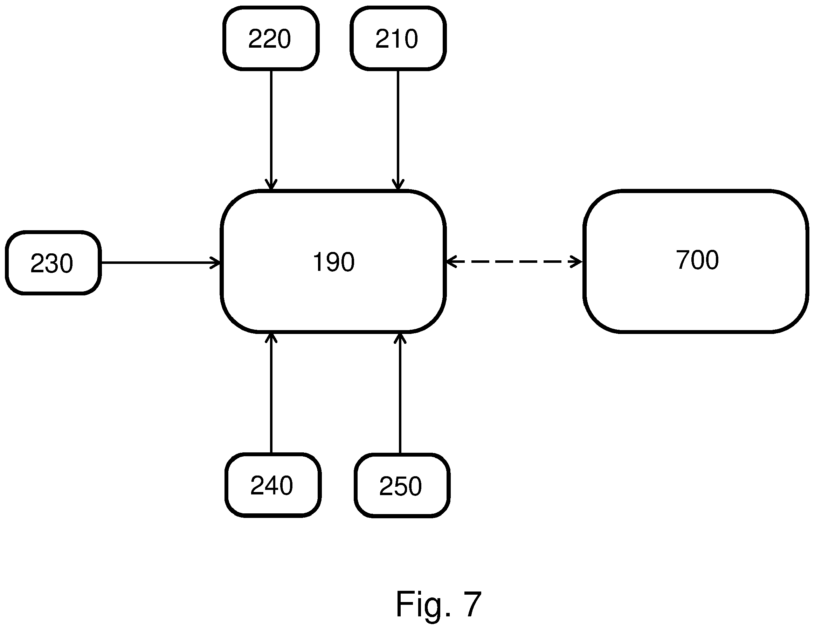

According to a first embodiment, the cyclist can send an activation and/or deactivation signal of the second charging mode of the accumulator to the electric control unit 190 through a manual actuator, for example a slider arranged at the frame or the handlebars of the electric bicycle, and/or through a computerized apparatus 700 outside of the bicycle capable of communicating with the electric control unit 190, which can for example be a smartphone, a smartwatch or a fitband; these can be used individually or in combination with one another; they communicate with the electric control unit 190 preferably via radio, more preferably through WPAN technology (for example, BlueTooth and ZigBee) or NFC technology - see Fig. 7. Clearly, if an external computerized apparatus is used it is possible not only to activate and deactivate the second charging mode, but also to carry out more sophisticated settings; for example, it is possible to choose the percentage of the mechanical energy generated by the cyclist by pedaling to be converted into stored electric energy.

According to a second embodiment, the activation and/or deactivation of the second charging mode of the accumulator can be controlled by the electric control unit 190 based on the signal, generated automatically, of one or more sensors (see Fig. 7 highlighting as an example a pedaling sensor 210, a braking sensor 220, a wheel rotation speed meter 230, an engine rotation speed meter 240 and a torque meter 250, but others are not ruled out).

For example, a sensor capable of autonomously providing a signal to the electric control unit 190 may be an inclinometer, which can make it possible to generate a charging deactivation signal of the electric accumulator 150 when the slope of the terrain travelled on by the electric bicycle 100 is more than a threshold value (uphill) and a charging activation signal of the electric accumulator 150 when the slope of the terrain travelled on by the electric bicycle 100 is less than a threshold value (downhill).

For example, a further sensor capable of autonomously providing a signal to the electric control unit 190 can be an external computerized apparatus of the type defined earlier, capable of communicating via radio with the electric control unit 190 and of generating a charging activation and/or deactivation signal of the electric accumulator 150 through the cross-referencing of one or more data available to it, for example data relative to the position (obtained through GPS), data relative to the telemetry and data relative to the physical condition of the cyclist.

The latter can advantageously be obtained by devices for monitoring physical condition, for example wristwatch-type measurers or chest straps, which communicate with the smartphone, preferably via radio.

The electric control unit 190 can be further adapted for internally storing data and information relative to the operation and/or to the use of the electric bicycle 100 such that data relative to the telemetry of the bicycle can be sent to the external computerized apparatus, in particular to a smartphone, preferably via radio, more preferably through WPAN or NFC technology.

## Claims

1. Electric bicycle (100) with an electric engine (140) powered by an electric accumulator (150) and adapted for propelling the electric bicycle, comprising:
- a frame (110),
- a front wheel (120) mounted on the frame,
- a rear wheel (130) mounted on the frame,
- an electromagnetic assembly (160) comprising at least one electromagnet (162),
- an electric converter (170) electrically connected to said electromagnetic assembly (160) and to said electric accumulator (150) such as to charge said electric accumulator thanks to electric energy received from said electromagnetic assembly (160), and
- an electronic control unit (190); wherein
- said front wheel (120) and/or said rear wheel (130) comprises a plurality of magnets (137) arranged at a peripheral region of the wheel;
**characterized in that**
the electric bicycle (100) comprises at least one pedaling sensor (210);
the electromagnetic assembly (160) comprises at least one electric actuator (164) adapted for radially and/ or axially changing a position of said at least one electromagnet (162) with respect to said front wheel (120) or said rear wheel (130);
- said at least one electromagnet (162) is fixed or bound to the frame (110), and it is positioned such as to magnetically interact with said plurality of magnets (137) differently depending on said position;
and the electronic control unit (190) is:
- adapted for controlling said at least one electric actuator such as to regulate magnetic interaction between said at least one electromagnet (162) of said electromagnetic assembly (160) and said plurality of magnets (137), and consequently regulate electric energy received by said electromagnetic assembly (160), and consequently regulate a charging energy flow of said electric accumulator (150);
- adapted for controlling said at least one electric actuator such as to determine the charging energy flow of said electric accumulator (150) when said at least one pedaling sensor (210) detects pedaling;
- and adapted for setting said charging energy flow as a function of data or information received by a user of the electric bicycle.

2. Electric bicycle (100) according to claim 1, wherein said electronic control unit (190) is adapted for controlling said at least one electric actuator so as to avoid charge of said electric accumulator (150) when said electric engine (140) contributes to the propulsion of the electric bicycle.

3. Electric bicycle (100) according to claim 1 or 2, comprising at least one braking sensor (220), wherein said electronic control unit (190) is adapted for controlling said at least one electric actuator such as to maximize charge of said electric accumulator (150) when said at least one braking sensor (220) detects braking.

4. Electric bicycle (100) according to any one of the preceding claims, wherein said electronic control unit (190) is adapted for setting said charging flow as a function of data or information received by at least one electric sensor.

5. Electric bicycle (100) according to any one of the preceding claims, wherein said electronic control unit (190) is adapted for setting said charging energy flow as a function of data or information received before use of the electric bicycle and/or during use of the electric bicycle.

6. Electric bicycle (100) according to any one of the preceding claims, wherein said electronic control unit (190) is also equipped with a manual control.

7. Electric bicycle (100) according to any one of the preceding claims, wherein said electromagnetic assembly (160) comprises at least three adjacent electromagnets or at least three pairs of adjacent electromagnets; wherein each electromagnet has a "U" shape, is fixed or bound to the frame (110), and it is positioned such as to magnetically interact with said plurality of magnets (137); wherein said electric converter (170) is three-phase.

8. Electric bicycle (100) according to any one of the preceding claims, comprising:
- a transmission axis on which said electric engine (140) acts and pedals (180) of the electric bicycle;
- a braking sensor (220), and/or
- a rotation speed meter (230) of said front wheel (120) or of said rear wheel (130), and/or
- a rotation speed meter (240) of the shaft of said electric engine (140), and/or
- a torque meter (250) associated with said transmission axis;
wherein said electronic control unit (190) is adapted for controlling said electric engine (140) as a function of electric signals received from said pedaling sensor (210) and/or said braking sensor (220) and/or said wheel rotation speed meter (230) and/or said engine rotation speed meter (240) and/or said torque meter (250).

9. Electric bicycle (100) according to claim 8, wherein said electronic control unit (190) is adapted for controlling said electric engine (140) as a function of a split parameter able to be set by the user before use and/or during use of the electric bicycle.

10. Electric bicycle (100) according to any one of the preceding claims, wherein said electric converter (170) is bi-directional and adapted, in a first operating mode, for receiving electric energy from said at least one electromagnet and supplying it to said electric accumulator (150), and, in a second operating mode, for receiving electric energy from said electric accumulator (150) and supplying it to said at least one electromagnet (162), preferably at least two electromagnets and even more preferably at least three electromagnets, thereby making the front wheel (120) or the rear wheel (130) of the bicycle rotate, so that said electric engine (140) is made through said at least one electromagnet (162), preferably at least two electromagnets and even more preferably at least three electromagnets, and said plurality of magnets (137).

11. Electric bicycle (100) according to claim 10, wherein switches between said first operating mode and said second operating mode are controlled by said electronic control unit (190) preferably also provided with manual control.

12. Electric bicycle (100) according to any one of the preceding claims, wherein said electronic control unit (190) is adapted for internally storing data and information relative to the operation and/or to the use of the electric bicycle.

13. Electric bicycle (100) according to any one of the preceding claims, wherein said electronic control unit (190) is adapted for communicating with external computerized apparatuses, in particular smartphones, preferably via radio, more preferably through WPAN or NFC technology.

## Patentansprüche

1. Elektrofahrrad (100) mit einem elektrischen Motor (140), der von einem elektrischen Akkumulator (150) angetrieben wird und zum Antrieb des Elektrofahrrads geeignet ist, umfassend:
- einen Rahmen (110),
- ein auf dem Rahmen montiertes Vorderrad (120),
- ein auf dem Rahmen montiertes Hinterrad (130),
- eine elektromagnetische Anordnung (160), umfassend mindestens einen Elektromagneten (162),
- einen elektrischen Wandler (170), der elektrisch mit der elektromagnetischen Anordnung (160) und dem elektrischen Akkumulator (150) verbunden ist, um den elektrischen Akkumulator dank der von der elektromagnetischen Anordnung (160) erhaltenen elektrischen Energie aufzuladen, und
- eine elektronische Steuereinheit (190); wobei
- das Vorderrad (120) und/oder das Hinterrad (130) eine Vielzahl von Magneten (137) aufweist, die in einem Umfangsbereich des Rades angeordnet sind;
**dadurch gekennzeichnet, dass**
das Elektrofahrrad (100) mindestens einen Pedalsensor (210) umfasst;
die elektromagnetische Anordnung (160) mindestens einen elektrischen Aktor (164) umfasst, der geeignet ist, eine Position des mindestens einen Elektromagneten (162) in Bezug auf das Vorderrad (120) oder das Hinterrad (130) radial und/oder axial zu verändern;
- der mindestens eine Elektromagnet (162) an dem Rahmen (110) befestigt oder gebunden ist und so positioniert ist, dass er mit der Vielzahl von Magneten (137) in Abhängigkeit von der Position unterschiedlich magnetisch interagiert;
und das elektronische Steuergerät (190):
- geeignet ist zum Steuern des mindestens einen elektrischen Aktors, um die magnetische Wechselwirkung zwischen dem mindestens einen Elektromagneten (162) der elektromagnetischen Anordnung (160) und der Vielzahl von Magneten (137) zu regulieren und folglich die von der elektromagnetischen Anordnung (160) empfangene elektrische Energie zu regulieren und folglich einen Ladeenergiefluss des elektrischen Akkumulators (150) zu regulieren;
- geeignet ist zum Steuern des mindestens einen elektrischen Aktors, um den Ladeenergiefluss des elektrischen Akkumulators (150) zu bestimmen, wenn der mindestens eine Pedalsensor (210) eine Pedalierung erfasst; und
- geeignet ist, den Ladeenergiefluss in Abhängigkeit von Daten oder Informationen einzustellen, die von einem Benutzer des Elektrofahrrads empfangen werden.

2. Elektrofahrrads (100) nach Anspruch 1, wobei die elektronische Steuereinheit (190) geeignet ist, den mindestens einen elektrischen Aktor so zu steuern, dass ein Aufladen des elektrischen Akkumulators (150) vermieden wird, wenn der Elektromotor (140) zum Antrieb des Elektrofahrrads beiträgt.

3. Elektrofahrrad (100) nach Anspruch 1 oder 2, das mindestens einen Bremssensor (220) umfasst, wobei die elektronische Steuereinheit (190) geeignet ist, den mindestens einen elektrischen Aktor so zu steuern, dass das Aufladen des elektrischen Akkumulators (150) maximiert wird, wenn der mindestens eine Bremssensor (220) eine Bremsung erfasst.

4. Elektrofahrrad (100) nach einem der vorstehenden Ansprüche, wobei die elektronische Steuereinheit (190) geeignet ist, den Ladefluss in Abhängigkeit von Daten oder Informationen einzustellen, die von mindestens einem elektrischen Sensor empfangen werden.

5. Elektrofahrrad (100) nach einem der vorstehenden Ansprüche, wobei die elektronische Steuereinheit (190) geeignet ist, den Ladeenergiefluss in Abhängigkeit von Daten oder Informationen einzustellen, die vor der Benutzung des Elektrofahrrads und/oder während der Benutzung des Elektrofahrrads empfangen werden.

6. Elektrofahrrad (100) nach einem der vorstehenden Ansprüche, wobei die elektronische Steuereinheit (190) auch mit einer manuellen Steuerung ausgestattet ist.

7. Elektrofahrrad (100) nach einem der vorstehenden Ansprüche, wobei die elektromagnetische Anordnung (160) mindestens drei benachbarte Elektromagnete oder mindestens drei Paare von benachbarten Elektromagneten umfasst; wobei jeder Elektromagnet eine "U"-Form hat, am Rahmen (110) befestigt oder gebunden ist und so positioniert ist, dass er mit der Vielzahl von Magneten (137) magnetisch interagiert; wobei der elektrische Wandler (170) dreiphasig ist.

8. Elektrofahrrad (100) nach einem der vorstehenden Ansprüche, umfassend:
- eine Übertragungsachse, auf die der Elektromotor (140) wirkt, und Pedale (180) des Elektrofahrrads;
- einen Bremssensor (220) und/oder
- einen Drehzahlmesser (230) für das Vorderrad (120) oder das Hinterrad (130) und/oder
- einen Drehzahlmesser (240) für die Welle des Elektromotors (140) und/oder
- einen Drehmomentmesser (250), der mit der Übertragungsachse verbunden ist;
wobei die elektronische Steuereinheit (190) geeignet ist, den Elektromotor (140) in Abhängigkeit von elektrischen Signalen zu steuern, die von dem Pedalsensor (210) und/oder dem Bremssensor (220) und/oder dem Raddrehzahlmesser (230) und/oder dem Motordrehzahlmesser (240) und/oder dem Drehmomentmesser (250) empfangen werden.

9. Elektrofahrrad (100) nach Anspruch 8, wobei die elektronische Steuereinheit (190) geeignet ist, den Elektromotor (140) in Abhängigkeit von einem Teilungsparameter zu steuern, der vom Benutzer vor und/oder während der Benutzung des Elektrofahrrads eingestellt werden kann.

10. Elektrofahrrad (100) nach einem der vorstehenden Ansprüche, wobei der elektrische Wandler (170) bidirektional ist und in einer ersten Betriebsart geeignet ist, elektrische Energie von dem mindestens einen Elektromagneten zu empfangen und sie dem elektrischen Akkumulator (150) zuzuführen, und in einer zweiten Betriebsart geeignet ist, elektrische Energie von dem elektrischen Akkumulator (150) zu empfangen und sie dem mindestens einen Elektromagneten (162) zuzuführen, vorzugsweise mindestens zwei Elektromagneten und noch bevorzugter mindestens drei Elektromagneten zuzuführen, wodurch das Vorderrad (120) oder das Hinterrad (130) des Fahrrads in Drehung versetzt wird, so dass der Elektromotor (140) durch den mindestens einen Elektromagneten (162), vorzugsweise mindestens zwei Elektromagneten und noch bevorzugter mindestens drei Elektromagneten und die Vielzahl von Magneten (137) angetrieben wird.

11. Elektrofahrrad (100) nach Anspruch 10, wobei die Umschaltung zwischen der ersten Betriebsart und der zweiten Betriebsart durch die elektronische Steuereinheit (190) gesteuert wird, die vorzugsweise auch mit einer manuellen Steuerung versehen ist.

12. Elektrofahrrad (100) nach einem der vorstehenden Ansprüche, wobei die elektronische Steuereinheit (190) zum internen Speichern von Daten und Informationen in Bezug auf den Betrieb und/oder die Verwendung des Elektrofahrrads geeignet ist.

13. Elektrofahrrad (100) nach einem der vorstehenden Ansprüche, wobei die elektronische Steuereinheit (190) zur Kommunikation mit externen computergestützten Geräten, insbesondere Smartphones, geeignet ist, vorzugsweise über Funk, bevorzugter über WPAN- oder NFC-Technologie.

## Revendications

1. Bicyclette électrique (100) ayant un moteur électrique (140) alimenté par un accumulateur électrique (150) et conçu pour propulser la bicyclette électrique, comprenant :
- un cadre (110),
- une roue avant (120) montée sur le cadre,
- une roue arrière (130) montée sur le cadre,
- un ensemble électromagnétique (160) comprenant au moins un électroaimant (162),
- un convertisseur électrique (170) électriquement connecté audit ensemble électromagnétique (160) et audit accumulateur électrique (150) de manière à charger ledit accumulateur électrique grâce à de l'énergie électrique reçue à partir dudit ensemble électromagnétique (160), et
- une unité de commande électronique (190) ; dans laquelle
- ladite roue avant (120) et/ou ladite roue arrière (130) comprend une pluralité d'aimants (137) agencés au niveau d'une région périphérique de la roue ; **caractérisé en ce que**
la bicyclette électrique (100) comprend au moins un capteur de pédalage (210) ;
l'ensemble électromagnétique (160) comprend au moins un actionneur électrique (164) conçu pour changer radialement et/ou axialement une position dudit au moins un électroaimant (162) par rapport à ladite roue avant (120) ou ladite roue arrière (130) ;
- ledit au moins un électroaimant (162) est fixé ou lié au cadre (110), et il est positionné de manière à interagir magnétiquement avec ladite pluralité d'aimants (137) différemment en dépendance de ladite position ;
et l'unité de commande électronique (190) est :
- conçue pour commander ledit au moins un actionneur électrique de manière à réguler une interaction magnétique entre ledit au moins un électroaimant (162) dudit ensemble électromagnétique (160) et ladite pluralité d'aimants (137), et par conséquent réguler l'énergie électrique reçue par ledit ensemble électromagnétique (160), et par conséquent réguler un flux d'énergie de charge dudit accumulateur électrique (150) ;
- conçue pour commander ledit au moins un actionneur électrique de manière à déterminer le flux d'énergie de charge dudit accumulateur électrique (150) lorsque ledit au moins un capteur de pédalage (210) détecte un pédalage ; et
- conçue pour régler ledit flux d'énergie de charge en fonction de données ou d'informations reçues par un utilisateur de la bicyclette électrique.

2. Bicyclette électrique (100) selon la revendication 1, dans laquelle ladite unité de commande électronique (190) est conçue pour commander ledit au moins un actionneur électrique de façon à éviter une charge dudit accumulateur électrique (150) lorsque ledit moteur électrique (140) contribue à la propulsion de la bicyclette électrique.

3. Bicyclette électrique (100) selon la revendication 1 ou 2, comprenant au moins un capteur de freinage (220), dans laquelle ladite unité de commande électronique (190) est conçue pour commander ledit au moins un actionneur électrique de manière à maximiser la charge dudit accumulateur électrique (150) lorsque ledit au moins un capteur de freinage (220) détecte un freinage.

4. Bicyclette électrique (100) selon l'une quelconque des revendications précédentes, dans laquelle ladite unité de commande électronique (190) est conçue pour régler ledit flux de charge en fonction de données ou d'informations reçues par au moins un capteur électrique.

5. Bicyclette électrique (100) selon l'une quelconque des revendications précédentes, dans laquelle ladite unité de commande électronique (190) est conçue pour régler ledit flux d'énergie de charge en fonction de données ou d'informations reçues avant l'utilisation de la bicyclette électrique et/ou pendant l'utilisation de la bicyclette électrique.

6. Bicyclette électrique (100) selon l'une quelconque des revendications précédentes, dans laquelle ladite unité de commande électronique (190) est également équipée d'une commande manuelle.

7. Bicyclette électrique (100) selon l'une quelconque des revendications précédentes, dans laquelle ledit ensemble électromagnétique (160) comprend au moins trois électroaimants adjacents ou au moins trois paires d'électroaimants adjacents ; dans laquelle chaque électroaimant possède une géométrie en « U », est fixé ou lié au cadre (110), et il est positionné de manière à interagir magnétiquement avec ladite pluralité d'aimants (137) ; dans laquelle ledit convertisseur électrique (170) est triphasé.

8. Bicyclette électrique (100) selon l'une quelconque des revendications précédentes, comprenant :
- un axe de transmission sur lequel ledit moteur électrique (140) agit et des pédales (180) de la bicyclette électrique ;
- un capteur de freinage (220), et/ou
- un compteur de vitesse de rotation (230) de ladite roue avant (120) ou de ladite roue arrière (130), et/ou
- un compteur de vitesse de rotation (240) de l'arbre dudit moteur électrique (140), et/ou
- un couple-mètre (250) associé audit axe de transmission ;
dans laquelle ladite unité de commande électronique (190) est conçue pour commander ledit moteur électrique (140) en fonction de signaux électriques reçus à partir dudit capteur de pédalage (210) et/ou dudit capteur de freinage (220) et/ou dudit compteur de vitesse de rotation de roue (230) et/ou dudit compteur de vitesse de rotation de moteur (240) et/ou dudit couple-mètre (250).

9. Bicyclette électrique (100) selon la revendication 8, dans laquelle ladite unité de commande électronique (190) est conçue pour commander ledit moteur électrique (140) en fonction d'un paramètre fractionné apte à être réglé par l'utilisateur avant l'utilisation et/ou pendant l'utilisation de la bicyclette électrique.

10. Bicyclette électrique (100) selon l'une quelconque des revendications précédentes, dans laquelle ledit convertisseur électrique (170) est bidirectionnel et conçu, dans un premier mode de fonctionnement, pour recevoir de l'énergie électrique à partir dudit au moins un électroaimant et alimenter avec celle-ci ledit accumulateur électrique (150), et, dans un second mode de fonctionnement, pour recevoir de l'énergie électrique à partir dudit accumulateur électrique (150) et alimenter avec celle-ci ledit au moins un électroaimant (162), de préférence au moins deux électroaimants et encore plus préférentiellement au moins trois électroaimants, ce qui amène la roue avant (120) ou la roue arrière (130) de la bicyclette à tourner, de sorte que ledit moteur électrique (140) est constitué par le biais dudit au moins un électroaimant (162), de préférence au moins deux électroaimants et encore plus préférentiellement au moins trois électroaimants, et de ladite pluralité d'aimants (137).

11. Bicyclette électrique (100) selon la revendication 10, dans laquelle des commutations entre ledit premier mode de fonctionnement et ledit second mode de fonctionnement sont commandées par ladite unité de commande électronique (190), de préférence également munie d'une commande manuelle.

12. Bicyclette électrique (100) selon l'une quelconque des revendications précédentes, dans laquelle ladite unité de commande électronique (190) est conçue pour stocker de manière interne des données et des informations relatives au fonctionnement et/ou à l'utilisation de la bicyclette électrique.

13. Bicyclette électrique (100) selon l'une quelconque des revendications précédentes, dans laquelle ladite unité de commande électronique (190) est conçue pour communiquer avec des appareils informatisés externes, en particulier des téléphones intelligents, de préférence via radio, plus préférentiellement par le biais d'une technologie de réseau personnel sans fil, WPAN, ou de communication en champ proche, NFC.
